# EUROPEAN PATENT SPECIFICATION

(11) **EP 1 085 665 B1**
(45) Date of publication and mention of the grant of the patent: **13.07.2005**
(21) Application number: 00307800.3
(22) Date of filing: 08.09.2000
(51) Int. Cl.: H04B 1/30, H03D 7/00

(54) **Digital receiver**
Digitales Empfänger
Récepteur numérique

(30) Priority: 16.09.1999 GB 9921811
(43) Date of publication of application: 21.03.2001
(73) Proprietor: Zarlink Semiconductor Limited, Swindon, Wiltshire SN2 2QW (GB)
(72) Inventor: Cowley, Nicholas Paul, Wroughton, Wiltshire SN4 0RT (GB); Payne, Alison, London SW9 9JY (GB); Dawkins, Mark, London SW11 5JB (GB)
(74) Representative: Robinson, John Stuart

(56) References cited:
- EP-A- 0 122 657
- EP-A- 0 237 590
- EP-A- 0 624 033
- WO-A-91/14311
- GB-A- 2 215 945
- US-A- 4 817 167
- US-A- 5 835 165
- US-A- 5 896 061
- US-A- 5 937 341

## Description

The present invention relates to a digital receiver. For example, such a receiver may be used as a digital terrestrial receiver, a digital cable receiver or in other multimedia digital receivers.

Known types of digital receivers are based on analog techniques, for example involving single-conversion or double-conversion superheterodyne techniques. Typically, such a receiver has a final intermediate frequency (IF) in the region of 36MHz. The IF signal is further amplified and filtered and is then down-converted to a near zero intermediate frequency (NZIF). The NZIF signal is then digitised and subjected to demodulation and other processing such as forward error correction in the digital domain.

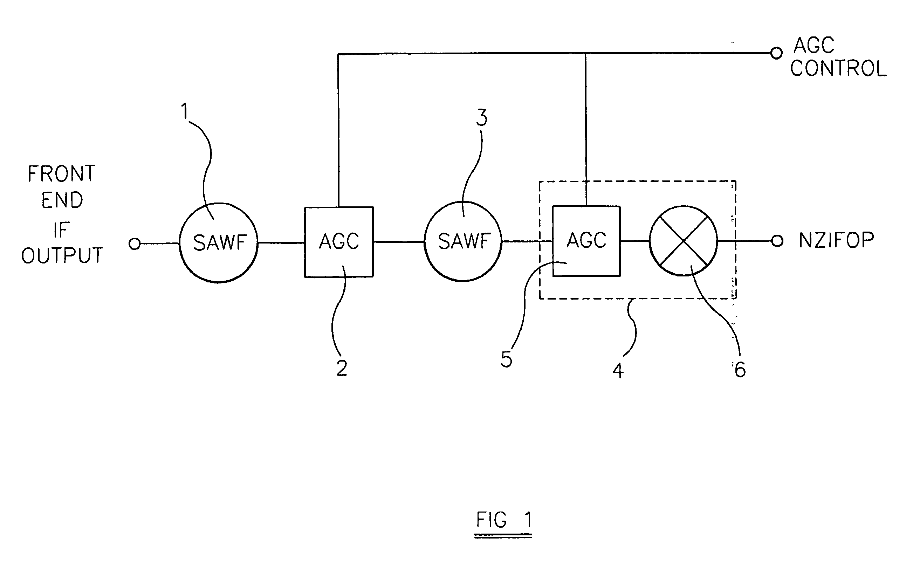

Figure 1 of the accompanying drawings illustrates a typical IF strip of such a known type of receiver. The IF signal from the front end is supplied via a first surface acoustic wave (SAW) filter 1 to a first automatic gain control amplifier 2. The output of the amplifier 2 is supplied via a further SAW filter 3 to a down-converter 4 comprising a second automatic gain controller amplifier 5 and a frequency changer 6. The frequency changer 6 converts the signal to an NZIF signal, which is typically supplied to a digital demodulator. The gains of the amplifiers 2 and 5 are controlled by an AGC control signal supplied by the demodulator.

When it is desired to receive a channel N, the two SAW filters 1 and 3 are required to attenuate the N+1 and N-1 channels by typically 70dB. This is a system requirement because, after conversion to the NZIF signal, the image channel is coincident with the N+1 or N-1 channel and may be up to 35dB above the level of the wanted channel N, which must be attenuated by at least 35dB relative to the channel N. Thus, several stages are necessary in order to receive the required channel, filter out the unwanted channels and convert the desired channel to the NZIF output signal.

The presence of two SAW filters 1 and 3 places substantial demands on the noise figure (NF) performance of the amplifier 2 and the converter 4 because each filter attenuates the wanted signal by typically 20dB. These constraints may limit the signal-to-noise performance of the receiver.

The required number of stages prohibits integration of the whole receiver into a single integrated circuit, not only because of the number of stages required but also because of the requirement for two external IF SAW filters. This results from the SAW filter insertion loss of 20dB and from the finite level of isolation which may be achieved around an integrated circuit package. For example, each SAW filter has an insertion loss of 20dB so that there is a total loss in the "direct" path of 40dB plus the gain of the amplifier 2 between the filters 1 and 3, which may typically be approximately 10dB. Thus, there is a net loss of about 30dB compared to a leakage path loss of typically of 45dB. The ratio of direct signal to leakage signal is therefore only about 15dB. Because the leakage signal is phase-shifted with respect to the direct signal, the leakage signal effectively appears as an interfering signal which can severely disrupt reception of the desired channel.

US 4 817 167 discloses an FM stereo receiver which comprises a single conversion zero intermediate frequency down-converter supplying in-phase and quadrature baseband signals to respective analog-digital converters. The converter outputs are supplied to an up-converter for converting the in-phase and quadrature signals to a near-zero intermediate frequency. The up-converter comprises a quadrature generator, a pair of mixers and a summer. Analog baseband filters and AGC circuits are provided between the down-converter and the analog-digital converters.

GB 2 215 945 discloses digital baseband filters in the context of a zero intermediate frequency receiver.

WO91/14311 discloses a receiver formed in a single monolithic integrated circuit.

EP 0 122 657 discloses a television receiver comprising a quadrature down-converter supplying in-phase and quadrature signals to an analog quadrature up-converter. The up-converter comprises mixers and a local oscillator producing quadrature outputs. The local oscillator comprises an amplitude and phase adjusting arrangement.

According to the invention, there is provided a digital receiver comprising: an analog single-conversion zero intermediate frequency down-converter for converting a selected radio frequency channel to in-phase (I) and quadrature (Q) base band signals; first and second analog digital converters for converting the I and Q base band signals to digital I and Q base band signals; a digital up-converter for converting the digital I and Q base band signals to a near-zero intermediate frequency signal; and a digital demodulator, characterised in that the up-converter has a phase adjuster for adjusting the relative phases of the digital I and Q baseband signals and the digital demodulator has a correction signal generator for supplying a feedback signal to the phase adjuster based on bit error rate in the demodulator in order substantially to correct for quadrature phase imbalance in the analog down-converter.

The up-converter may comprise a quadrature generator for generating quadrature local oscillator signals, first and second mixers for mixing the digital I and Q base band signals, respectively, with the quadrature local oscillator signals, and a summer for summing output signals of the first and second mixers.

The phase adjuster may be arranged to adjust the phase of at least one of the quadrature local oscillator signals in response to the feedback signal.

The phase adjuster may be arranged to provide an adjustable delay.

The up-converter may be connected to the first and second analog-digital converters via first and second digital base band filters, respectively. The up-converter may be connected to the first and second digital base band filters via first and second digital automatic gain control circuits, respectively.

The first and second analog digital converters may be connected to the down-converter via first and second analog base band filters, respectively. The first and second analog-digital converters may be connected to the first and second analog base band filters via first and second analog automatic gain control circuits, respectively.

The down-converter may be connected to an input of the receiver via a third automatic gain control circuit.

The receiver may be formed in a single monolithic integrated circuit.

It is thus possible to provide a receiver in which the radio frequency (RF) circuitry is substantially simplified and any resulting inadequacies are overcome by increased baseband digital signal processing (DSP). Such a receiver may be implemented as or as part of a single integrated circuit, thus providing reduced size and cost while providing an improved performance compared with known digital receivers.

The invention will be further described, by way of example, with reference to the accompanying drawings, in which:
Figure 1 is a block circuit diagram of an IF strip of a known type of receiver;
Figure 2 is a block circuit diagram of a digital receiver constituting an embodiment of the invention;
Figure 3 is a diagram illustrating the spectrum of RF signals in three adjacent channels of a digital terrestrial broadcast system; and
Figure 4 is a vector diagram of the incoming required and image signal in the I and Q channels after down conversion in the receiver of Figure 2;
Figure 5 is a vector diagram of the required and image signals in the I and Q channels after upconversion in the receiver of Figure 2; and
Figure 6 is a more detailed block circuit diagram of part of the receiver of Figure 2.

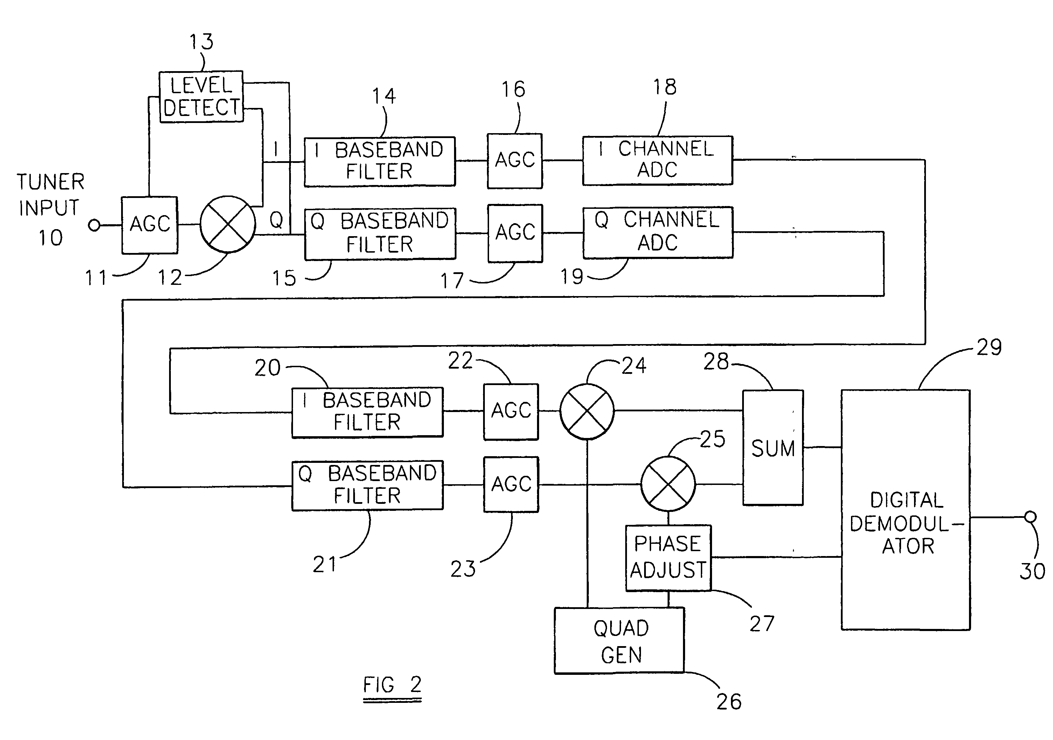

The receiver shown in Figure 2 is intended for use as a digital terrestrial receiver but may be used in other applications. A receiver input 10 is connected to an RF front end in the form of an automatic gain control circuit 11 and a frequency changer 12 of the zero IF down-converter type. The frequency changer 12 converts the selected RF channel to base band I and Q signals which are supplied to a level detector 13 for controlling the AGC circuit 11 and to identical I and Q channels. The front end may be of known type and will not be described further. The quadrature balance of the front end is not critical because any imbalance is dealt with elsewhere as described hereinafter.

The I and Q channels comprise I and Q baseband filters 14 and 15 whose outputs are supplied via analog AGC circuits 16 and 17 to simultaneously clocked analog-digital converters (ADCs) 18 and 19, respectively.

The outputs of the converters 18 and 19 are supplied via digital baseband filters 20 and 21 to digital AGC circuits 22 and 23, respectively. The outputs of the AGC circuits 22 and 23 are supplied to a digital up-converter.

The up-converter comprises first and second mixers 24 and 25 which receive the digital I and Q baseband signals together with quadrature local oscillator signals. The local oscillator signals are generated by a quadrature generator 26 and one of the signals passes through a phase adjuster 27, for example providing an adjustable delay to the signal from the generator 26, controlled by a phase adjust feedback signal from a digital demodulator 29. The outputs of the mixers 24 and 25 are supplied to a summer 28, whose output provides an NZIF output signal to the digital demodulator 29. The demodulator output 30 forms the output of the receiver.

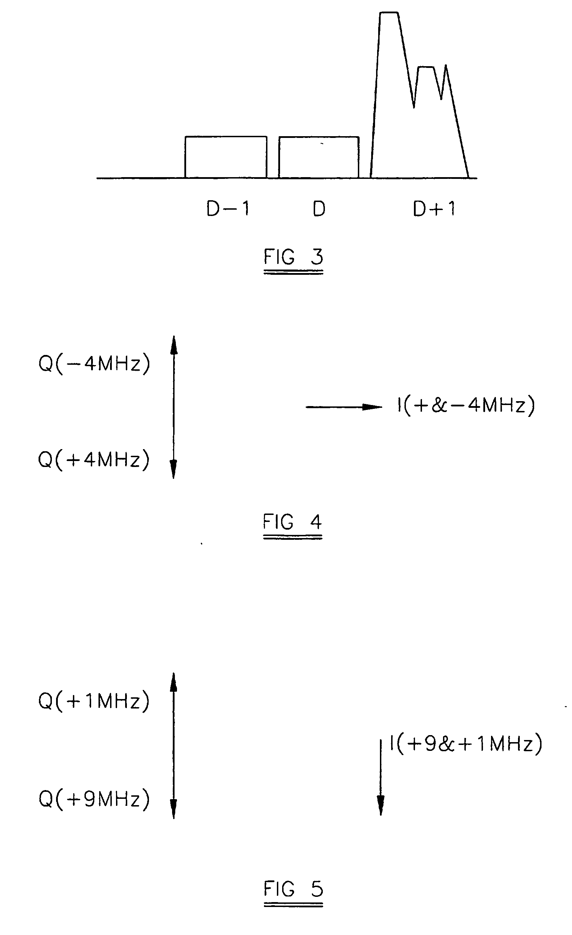

Figure 3 illustrates the spectrum of three adjacent channels D-1, D and D+1. By way of example, the channel D-1 occupies a band 492 to 500MHz, the channel D occupies a band 500 to 508MHz and the channel D+1 occupies a band from 508 to 516MHz. It is desired to receive the channel D but the power of the signal in the channel D+1 is +35dBm greater than that in the channel D. The local oscillator of the frequency changer 12 is set to 504MHz and the whole RF spectrum including the channels shown in Figure 3 are quadrature frequency down-converted to zero IF so that the converted channel D is centered on 0Hz. For both the I and Q components, the frequency 508MHz is converted to +4MHz and the frequency 500MHz is converted to -4MHz. Because of the phase characteristics of the quadrature signals, the positive and negative frequency offsets of the I channel are in phase whereas the positive and negative frequencies of the Q channel are in antiphase. This is illustrated pictorially in Figure 4.

The level detector 13 and the AGC circuit 11 limit the amplitude of input signals to the frequency changer 12 so as to limit the generation of intermodulation products in this stage. Also, the down-conversion performed by the front end inherently introduces quadrature phase imbalances. However, these are dealt with in the digital domain as described hereinafter.

The baseband I and Q signals are supplied to the baseband filters 14 and 15 which attenuate energy from the spectrum outside the baseband of the I and Q signals. This helps to prevent overloading of the converters 18 and 19. The AGC circuits 16 and 17 control the signal levels to the converters 18 and 19 following the baseband filtering.

The converters 18 and 19 convert the baseband signals into digital baseband signals for subsequent processing in the digital domain. The digital filters 20 and 21 may be required because of imperfections in the filtering performed in the analog domain by the baseband filters 14 and 15. Similarly, the AGC circuits 22 restore defined signal levels to the digital I and Q signals which are then supplied to the up-converter.

Because it is possible for a channel adjacent the selected channel to contain relatively high signal levels, for example as illustrated in Figure 3, sufficient filtering must be provided to suppress the undesired channel signals to a sufficient level below the desired signals at the inputs of the up-converter. If this can be achieved by the analog filters 14 and 15 or by filtering which may be provided in the front end, the digital filters 20 and 21 may be unnecessary, in which case the AGC circuits 22 and 23 would be unnecessary.

The up-converter mixes or multiplies the digital I and Q signals with locally generated quadrature signals at 5MHz. Thus, the frequencies +4MHz and -4MHz are converted to 1MHz and 9MHz, respectively. This is illustrated in the vector diagram shown in Figure 5 which demonstrates the conversion in the I and Q channels of the +4MHz tone. These up-converted digital signals are vectorially summed in the summer 28 where, as illustrated, the +9MHz tones are summed and the +1MHz tones cancel each other. The same happens for the -4MHz tone; in particular the +1MHz tones are summed and the +9MHz tones cancel each other. The original signal is thus reconstructed and may then be supplied to a digital demodulator (not shown).

The demodulator supplies a phase adjust feedback correction signal to the phase adjuster 27 which compensates for phase errors in the initial down-conversion performed in the front end converter 12 and thus makes it possible to meet the quadrature crosstalk requirements of a digital receiver.

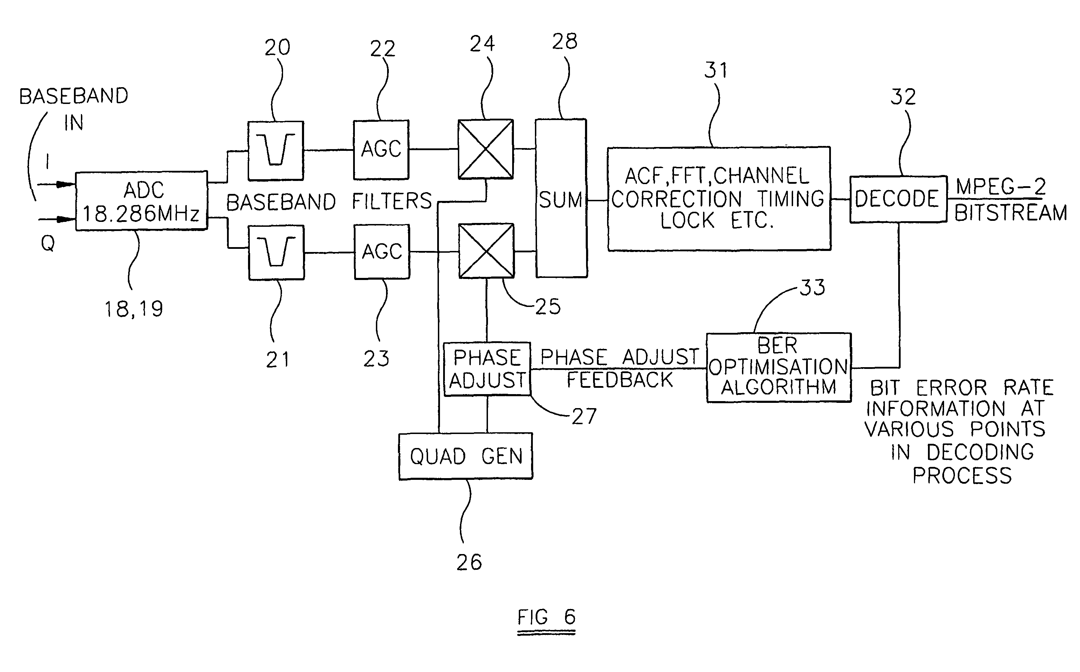

As shown in Figure 6, the ADCs 18, 19 have a sampling rate of 18.26MHz. Figure 6 also illustrates the digital demodulator 29 in more detail for the specific example of complimentary offset frequency division modulation (COFDM) signals. However, other standards may be used such as ATSC or QAM.

The digital demodulator comprises a main demodulating section 31 which, for example, performs automatic frequency control (AFC), fast Fourier transform (FFT), channel correction and timing lock. The output of the section 31 is supplied to a decoder 32 which, for example, performs MPEG-2 decoding.

The demodulator 29 also comprises a feedback signal generator in the form of a bit error rate (BER) optimisation algorithm 33 which supplies the phase adjust feedback signal to the phase adjuster 27. The algorithm 33 monitors the bit error rate at various stages in the decoding process, for example after the FFT or after Viterbi decoding. The algorithm derives from the bit error rate a correction or feedback signal which adjusts the delay provided by the phase adjuster 27 and hence varies the relative phase of the local oscillator signals supplied to the mixers 24 and 25. In particular, the relative phase is adjusted so as to minimise the bit error rate. Provided other sources of error are fixed or vary slowly in time, it is possible to provide an algorithm with a small conversion time and a steady solution. Algorithms which act to minimise a measured quantity are well known in the field of signal processing. It is thus possible substantially to correct for phase error or imbalance in the analog down-converter 12, whose quadrature performance requirements are not therefore critical to achieving an acceptable signal-to-noise ratio and hence an acceptably low bit error rate in the MPEG-2 bit stream supplied to the output 30 of the receiver.

The receiver illustrated in Figure 2 provides improved performance compared with known receivers, such as that using the IF strip illustrated in Figure 1. Further, the receiver may be implemented in a single monolithic integrated circuit without, for example, requiring external filters. The receiver may therefore be made more compact and manufacturing cost may be substantially reduced.

## Claims

1. A digital receiver comprising: an analog single conversion zero intermediate frequency down-converter (12) for converting a selected radio frequency channel to in-phase (I) and quadrature (Q) baseband signals; first and second analog-digital converters (18, 19) for converting the I and Q baseband signals to digital I and Q baseband signals; a digital up-converter (24-28) for converting the digital I and Q baseband signals to a near-zero intermediate frequency signal; and a digital demodulator (29), **characterised in that** the up-converter (24-28) has a phase adjuster (27) for adjusting the relative phase of the digital I and Q baseband signals and the digital demodulator (29) has a correction signal generator (33) for supplying a feedback signal to the phase adjuster (27) based on bit error rate in the demodulator (29) in order substantially to correct for quadrature phase imbalance in the analog down-converter (12).

2. A receiver as claimed in claim 1, **characterised in that** the up-converter (24-28) comprises a quadrature generator (26) for generating quadrature local oscillator signals, first and second mixers (24, 25) for mixing the digital I and Q baseband signals, respectively, with the quadrature local oscillator signals, and a summer (28) for summing output signals of the first and second mixers.

3. A receiver as claimed in claim 2, **characterised in that** the phase adjuster (27) is arranged to adjust the phase of at least one of the quadrature local oscillator signals in response to the feedback signal.

4. A receiver as claimed in any one of the preceding claims, **characterised in that** the phase adjuster (27) is arranged to provide an adjustable delay.

5. A receiver as claimed in any one of the preceding claims, **characterised in that** the up-converter (24-28) is connected to the first and second analog-digital converters (18, 19) via first and second digital baseband filters (20, 21), respectively.

6. A receiver as claimed in claim 5, **characterised in that** the up-converter (24-28) is connected to the first and second digital baseband filters (20, 21) via first and second digital automatic gain control circuits (22, 23), respectively.

7. A receiver as claimed in any one of the preceding claims, **characterised in that** the first and second analog-digital converters (18, 19) are connected to the down-converter (12) via first and second analog baseband filters (14, 15), respectively.

8. A receiver as claimed in claim 7, **characterised in that** the first and second analog-digital converters (18, 19) are connected to the first and second analog baseband filters (14, 15) via first and second analog automatic gain control circuits (16, 17), respectively.

9. A receiver as claimed in any one of the preceding claims, **characterised in that** the down-converter (12) is connected to an input (10) of the receiver via a third automatic gain control circuit (11).

10. A receiver as claimed in any one of the preceding claims, formed in a single monolithic integrated circuit.

## Patentansprüche

1. Digitaler Empfänger mit einem analogen Nullzwischenfrequenz-Abwärtsumsetzer mit einfacher Umsetzung (12) zum Umsetzen eines gewählten Funkfrequenzkanals in ein In-Phase-(I-) und ein Quadratur-(Q-)Basisbandsignal; einem ersten und zweiten Analog-Digital-Umsetzer (18, 19) zum Umsetzen des I- und Q-Basisbandsignals in ein digitales I- und Q-Basisbandsignal; einem digitalen Aufwärtsumsetzer (24-28) zum Umsetzen des digitalen I- und Q-Basisbandsignals in ein Nahenull-Zwischenfrequenzsignal; und einem digitalen Demodulator (29), **dadurch gekennzeichnet, daß** der Aufwärtsumsetzer (24-28) einen Phasenregulierer (27) zum Regulieren der relativen Phase des digitalen I- und Q-Basisbandsignals hat und der digitale Demodulator (29) einen Korrektursignalgenerator (33) hat; zum Liefern eines Rückkopplungssignals an den Phasenregulierer (27) auf der Grundlage einer Bitfehlerrate im Demodulator (29), um eine Quadraturphasen-Unsymmetrie im analogen Abwartsumsetzer (12) im wesentlichen zu korrigieren.

2. Empfänger nach Anspruch 1, **dadurch gekennzeichnet, daß** der Aufwärtsumsetzer (24-28) einen Quadraturgenerator (26) zum Erzeugen von Lokaloszillator-Quadratursignalen, einen ersten Mischer (24, 25) zum Mischen des digitalen I- bzw. Q-Basisbandsignals mit den Lokaloszillator-Quadratursignalen und einen Summierer (28) zum Summieren von Ausgangssignalen des ersten und zweiten Mischers umfaßt.

3. Empfänger nach Anspruch 2, **dadurch gekennzeichnet, daß** der Phasenregulierer (27) eingerichtet ist, um die Phase von mindestens einem der Lokaloszillator-Quadratursignale als Antwort auf das Rückkopplungssignal zu regulieren.

4. Empfänger nach einem der vorhergehenden Ansprüche, **dadurch gekennzeichnet, daß** der Phasenregulierer (27) eingerichtet ist, um eine regulierbare Verzögerung bereitzustellen.

5. Empfänger nach einem der vorhergehenden Ansprüche, **dadurch gekennzeichnet, daß** der Aufwärtsumsetzer (24-28) mit dem ersten und zweiten Analog-Digital-Umsetzer (18, 19) über ein erstes bzw. zweites digitales Basisbandfilter (20, 21) verbunden ist

6. Empfänger nach Anspruch 5, **dadurch gekennzeichnet, daß** der Aufwärtsumsetzer (24-28) mit dem ersten und zweiten digitalen Basisbandfilter (20, 21) über eine erste bzw. zweite digitale automatische Verstärkungsregelungsschaltung (22, 23) verbunden ist.

7. Empfänger nach einem der vorhergehenden Ansprüche, **dadurch gekennzeichnet, daß** der erste und zweite Analog-Digital-Umsetzer (18, 19) mit dem Abwärtsumsetzer (12) über ein erstes bzw. zweites analoges Basisbandfilter (14, 15) verbunden sind.

8. Empfänger nach Anspruch 7, **dadurch gekennzeichnet, daß** der erste und zweite Analog-Digital-Umsetzer (18, 19) mit dem ersten und zweiten analogen Basisbandfilter (14, 15) über eine erste bzw. zweite analoge automatische Verstärkungsregelungsschaltung (16, 17) verbunden sind.

9. Empfänger nach einem der vorhergehenden Ansprüche, **dadurch gekennzeichnet, daß** der Abwärtsumsetzer (12) mit einem Eingang (10) des Empfangers über eine dntte automatische Verstärkungsregelungsschaltung (11) verbunden ist.

10. Empfänger nach einem der vorhergehenden Ansprüche, der in einer einzelnen monolithischen integrierten Schaltung ausgebildet ist.

## Revendications

1. Récepteur numérique comprenant: un convertisseur-abaisseur de fréquence intermédiaire zéro à conversion unique analogique (12) pour convertir un canal de fréquence radio sélectionné selon des signaux de bande de base en phase (I) et en quadrature (Q); des premier et second convertisseurs analogique-numérique ou A/N (18, 19) pour convertir les signaux de bande de base I et Q selon des signaux de bande de base I et Q numénques; un convertisseur-élévateur numénque (24-28) pour convertir les signaux de bande de base I et Q numériques selon un signal de fréquence intermédiaire proche de zéro; et un démodulateur numénque (29), **caractérisé en ce que** le convertisseur-élévateur (24-28) comporte un régleur de phase (27) pour régler la phase relative des signaux de bande de base I et Q numériques et le démodulateur numénque (29) comporte un générateur de signal de correction (33) pour appliquer un signal de retour sur le régleur de phase (27) sur la base d'un taux d'erreurs binaires dans le démodulateur (29) afin de corriger de façon substantielle un déséquilibre de phase en quadrature dans le convertisseur-abaisseur analogique (12).

2. Récepteur selon la revendication 1, caracténsé en ce que le convertisseur-élévateur (24-28) comprend un générateur en quadrature (26) pour générer des signaux d'oscillateur local en quadrature, des premier et second mélangeurs (24, 25) pour mélanger les signaux de bande base I et Q numériques, de façon respective, avec les signaux d'oscillateur local en quadrature et un sommateur (28) pour sommer des signaux de sortie des premier et second mélangeurs.

3. Récepteur selon la revendication 2, **caractérisé en ce que** le régleur de phase (27) est agencé pour régler la phase d'au moins l'un des signaux d'oscillateur local en quadrature en réponse au signal de retour.

4. Récepteur selon l'une quelconque des revendications précédentes, **caractérisé en ce que** le régleur de phase (27) est agencé pour fournir un retard réglable.

5. Récepteur selon l'une quelconque des revendications précédentes, **caractérisé en ce que** le convertisseur-élévateur (24-28) est connecté aux premier et second convertisseurs analogique-numérique ou A/N (18, 19) via des premier et second filtres de bande de base numériques (20, 21), de façon respective.

6. Récepteur selon la revendication 5, caracténsé en ce que le convertisseur-élévateur (24-28) est connecté aux premier et second filtres de bande de base numériques (20, 21) via des premier et second circuits de commande automatique de gain numériques (22, 23), de façon respective.

7. Récepteur selon l'une quelconque des revendications précédentes, **caractérisé en ce que** les premier et second convertisseurs analogique-numérique ou A/N (18, 19) sont connectés au convertisseur-abaisseur (12) via des premier et second filtres de bande de base analogiques (14, 15), de façon respective.

8. Récepteur selon la revendication 7, **caractérisé en ce que** les premier et second convertisseurs analogique-numérique ou A/N (18, 19) sont connectés aux premier et second filtres de bande de base analogiques (14, 15) via des premier et second circuits de commande automatique de gain analogiques (16, 17), de façon respective.

9. Récepteur selon l'une quelconque des revendications précédentes, **caractérisé en ce que** le convertisseur-abaisseur (12) est connecté à une entrée (10) du récepteur via un troisième circuit de commande automatique de gain (11).

10. Récepteur selon l'une quelconque des revendications précédentes, formé selon un circuit intégré monolithique unique.
